# EUROPÄISCHE PATENTANMELDUNG

(11) **EP 0 821 526 A2**
(43) Veröffentlichungstag der Anmeldung: **28.01.1998**
(21) Anmeldenummer: 97110308.0
(22) Anmeldetag: 24.06.1997
(51) Int. Cl.: H04N 7/14

(54) **Erweiterungsmodul für Bildtelefone**

(30) Priorität: 25.07.1996 DE 19630047
(71) Anmelder: SIEMENS AKTIENGESELLSCHAFT, 80333 München (DE)
(72) Erfinder: Vogt, Helmut, Dipl.-Ing., 81375 München (DE)

(57) **Zusammenfassung**

Die Erfindung bertrifft ein Erweiterungsmodul (EM), mit einem Tuner (TU) für Rundfunk- und/oder Fernsehempfang, zum Anschluß an ein Bildtelefon (BT), bei dem der Erweiterungsmodul (EM) zum Anschluß an die Kameraanschlußbuchse (AB) des Bildtelefons (BT) ausgebildet ist.

## Beschreibung

Die Erfindung betrifft ein Erweiterungsmodul mit einem Rundfunk- und/oder Fernsehempfangsteil zum Anschluß an ein Bildtelefon.

Mit den auf dem Markt befindlichen Bildtelefonen ist nur eine Kommunikation von Angesicht zu Angesicht bzw. das Zeigen von Dokumenten und Gegenständen möglich.

Der Erfindung liegt die Aufgabe zugrunde den Anwendungsbereich des Bildtelefones zu erweitern.

Diese Aufgabe wird erfindungsgemäß durch die im Patentanspruch 1 angegebenen Merkmale gelöst.

Durch den erfindungsgemäßen Erweiterungsmodul wird das Bildtelefon praktisch zu einem Multimedia-Gerät aufgerüstet. Radio- und Fernsehempfang sind zwar nicht die Hauptanwendungen von Bildtelefonen, jedoch ein für den Kunden attraktiver Zusatznutzen im geschäftlichen Bereich durch beispielsweise den Empfang von Infosendungen und Börsennachrichten.

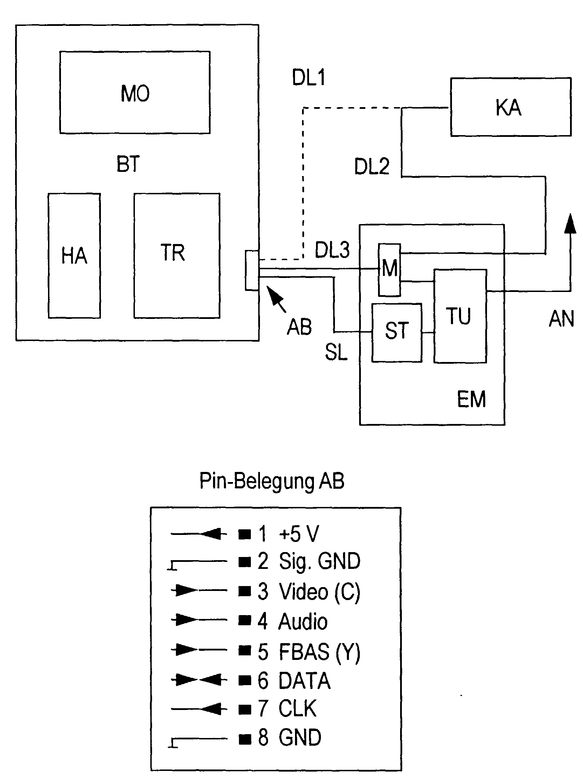

Im folgenden wird die Erfindung anhand eines in der Zeichnung dargestellten Ausführungsbeispieles beschrieben.

In der einzigen Figur ist ein Bildtelefon BT dargestellt, daß einen Monitor MO, einen Handapparat HA und einen Tastaturblock TR aufweist. Am Bildtelefon BT ist eine Kameraanschlußbuche AB vorgesehen, an der eine externe Kamera KA über eine Datenleitung DL 1 anschließbar ist. Die Kamera KA dient bei einem Bildferngespräch zur Videoaufnahme, beispielsweise der telefonierenden Person, und der Monitor MO zur Wiedergabe, beispielsweise der angerufenen Person.

Die Kameraanschlußbuchse AB weist beispielsweise acht Anschluß-Pins auf, die mit den in der Figur angegebenen Signalen, Steuersignalen und Potentialen belegt sind.

Erfindungsgemäß wird ein Erweiterungsmodul EM an dieser Kameraanschlußbuchse AB angeschaltet. Der Erweiterungsmodul EM, eine kleine externe Box, die an Stelle der Kamera KA an der Anschlußbuchse AB des Bildtelefons BT angeschlossen wird, weist einen Tuner TU für den Fernseh- und/oder Rundfunkempfang auf. Der Tuner TU gibt, wie die Kamera KA, ein analoges FBAS-Videosignal ab, welches über eine Datenleitung DL 3 an die Anschlußbuchse AB gegeben wird. Am Tuner TU ist eine Antenne AN angeschlossen.

Das Bildtelefon BT wandelt dieses FBAS-Videosignal in einem üblicherweise vorhandenen Videoencoder in ein digitales Datenformat YUV4:2:2 um, das der Videocodec im Bildtelefon BT direkt weiterverarbeiten kann. Das vom Tuner TU kommende Videosignal wird also genauso verarbeitet, wie das sonst von der Kamera KA abgegebene Videosignal.

Bei einer Ausgestaltung der Erfindung weist der Erweiterungsmodul EM einen Multiplexer M auf, an dessen einem Eingang der Tuner TU angeschaltet ist, und über den das vom Tuner TU abgegebene Videosignal auf die Datenleitung DL 3 gegeben wird. Am anderen Eingang des Multiplexers M ist die Kamera KA anschließbar. Hierzu weist der Erweiterungmodul EM eine weitere Kameraanschlußbuchse auf, die in der Figur nicht näher dargestellt ist.

Zur Steuerung des Tuners TU, d.h. zur Einstellung der verschiedenen Sender und Empfangsmodi, kann im Erweiterungsmodul EM eine Steuerung ST vorgesehen sein. Diese Steuerung ST ist über eine Steuerleitung SL mit der Anschlußbuchse AB verbunden. Zum Anschluß der Steuerleitung SL wird vorzugsweise der Pin 6 für serielle Daten der Anschlußbuchse AB verwendet. Die Bedienung des Tuners TU im Erweiterungsmodul EM ist hierbei als zusätzlicher Menüpunkt in der Menüsteuerung des Bildtelefons BT vorgesehen.

Der erfindungsgemäße Erweiterungsmodul EM ist vom Benutzer des Bildtelefons BT ohne Hardwareänderung einfach anzustecken.

Bei einer Steuerung der Tunereinstellungen im Erweiterungsmodul EM vom Bildtelefon BT her sind am Erweiterungsmodul EM keine Bedienelemente vorzusehen. Die Bedienung erfolgt ausschließlich über den Tastaturblock TR des Bildtelefons BT.

Der Erweiterungsmodul EM benötigt keine eigene Stromversorgung, da er über die Anschlußbuchse AB vom Bildtelefon BT versorgt wird.

Die vorhandene Kamera KA kann weiter genutzt werden. Sie wird nun am Erweiterungsmodul EM angeschlossen, wo sich dieselbe Anschlußbuchse wie beim Bildtelefon BT befindet. Das Videosignal der Kamera KA wird durch den Erweiterungsmodul EM geschleift. Der in dem Erweiterungsmodul EM vorgesehene Multiplexer M schaltet das Videosignal vom Tuner TU auf das Signal der Kamera KA um und umgekehrt.

### Bezugszeichenliste

- MO: Monitor
- BT: Bildtelefon
- HA: Handapparat
- KA: Kamera
- TR: Tastaturblock
- EM: Erweiterungsmodul
- AN: Antenne
- DL: Datenleitung
- TU: Tuner
- SL: Standleitung
- M: Multiplexer
- ST: Steuerung
- AB: Kameraanschlußbuchse

## Patentansprüche

1. Erweiterungsmodul (EM), mit einem Tuner (TU) für Rundfunk- und/oder Fernsehempfang, zum Anschluß an ein Bildtelefon (BT), bei dem der Erweiterungsmodul (EM) zum Anschluß an die Kameraanschlußbuchse (AB) des Bildtelefons (BT) ausgebildet ist.

2. Erweiterungsmodul (EM) nach Anspruch 1,
mit einer Steuerung (ST) zur Sendereinstellung des Tuners (TU), wobei die Steuerung (ST) vom Bildtelefon (BT) her mit einem Steuersignal beaufschlagt ist.

3. Erweiterungsmodul (EM) nach Anspruch 1 oder 2,
mit einem Multiplexer (M) über den wahlweise das Signal des Tuners (TU) oder das Signal einer extern angeordneten Kamera (KA) zum Bildtelefon (BT) durchschaltbar ist.
